# EUROPÄISCHE PATENTSCHRIFT

(11) **EP 1 891 327 B1**
(45) Veröffentlichungstag und Bekanntmachung des Hinweises auf die Patenterteilung: **17.04.2013**
(21) Anmeldenummer: 06761975.9
(22) Anmeldetag: 06.06.2006
(51) Int. Cl.: F03D 11/00, F03D 1/06, F03D 7/02

(54) **WINDKRAFTANLAGE MIT EINER ROTORBLATTLAGERUNG SOWIE VERFAHREN ZUM BETRIEB EINER DERARTIGEN WINDKRAFTANLAGE**
WIND TURBINE COMPRISING A ROTOR BLADE BEARING ARRANGEMENT, AND METHOD FOR OPERATING A WIND TURBINE
EOLIENNE POURVUE D'UN SUPPORT DE PALE, ET PROCEDE POUR FAIRE FONCTIONNER CETTE EOLIENNE

(30) Priorität: 06.06.2005 DE 102005026141
(43) Veröffentlichungstag der Anmeldung: 27.02.2008
(73) Patentinhaber: IMO Holding GmbH, 91350 Gremsdorf (DE)
(72) Erfinder: RUSS, Erich, 91350 Gremsdorf (DE); SCHRÖPPEL, Werner, 98530 Wendelstein (DE)
(74) Vertreter: Küchler, Stefan
(86) Internationale Anmeldenummer: PCT/EP2006/005362
(87) Internationale Veröffentlichungsnummer: WO 2006/131301

(56) Entgegenhaltungen:
- EP-A- 0 238 725
- EP-A- 1 286 048
- EP-B- 1 259 741
- CA-A1- 2 536 058
- DE-A1- 2 011 141
- DE-A1- 2 648 144
- DE-A1- 19 739 164
- US-A- 3 652 141
- "Blattanschluss zur Rotornabe" In: Hau, E.: "Windkraftanlagen", 1 January 1996 (1996-01-01), Springer-Verlag, Berlin, XP007921063, ISBN: 3-540-57430-1 pages 206-209, * page 206 - page 209 *
- Hau, E: "Windturbines", 1 January 2000 (2000-01-01), Springer-Verlag, Berlin, XP007921062, pages 228-230,

## Beschreibung

Die Erfindung richtet sich auf eine Windkraftanlage, umfassend wenigstens zwei axial gegeneinander versetzte Laufbahnen mit umlaufenden Wälzkörpern; ferner auf ein Verfahren zum Betrieb einer derartigen Windkraftanlage.

Windkraftanlagen - und damit insbesondere deren Rotordurchmesser - werden immer größer. Dementsprechend steigt auch die Beanspruchung sämtlicher Trag- und Lagereinheiten. Dies trifft auch auf die Blattlager zu, welche der Verstellung des Blattanstellwinkels dienen und eine Anpassung an unterschiedliche Windgeschwindigkeiten erlauben, einerseits für eine optimale Leistungsregelung und andererseits in Form einer Sturmwindabschaltung. Hierbei ist die größte Belastung das Kippmoment, welches die im Zentrum des Winddrucks (center of pressure Cₚ, etwa in der Mitte der Rotorblattlänge) konzentrierte Windlast auf die Blattlager einleitet. Bezüglich dieses Kippmomentes sind die Blattlager als Angelpunkt zu betrachten, und aufgrund des beträchtlichen Hebelarms resultiert aus der Windlast eine sehr hohe Biegebeanspruchung der Blattwurzel und der Blattlager. Die Biegemomente sind an den Blattlagern dadurch weitaus schwieriger als an den Lagerungen für den Rotor insgesamt, weil sich dort die von den um gleiche Drehwinkel gegeneinander versetzt montierten Rotorblättern erzeugten Biegemomente weitgehend kompensieren. Außerdem dreht sich der Rotor einer Windkraftanlage während der Drehmomenteinleitung stets, so dass die dortigen Wälzkörper dabei in Bewegung sind und keine lokalen Dauerbelastungen zu befürchten sind im Gegensatz zu den Rotorblattlagerungen, welche üblicherweise nur dann zur Verstellung des Rotorblatt-Anstellwinkels verdreht werden, wenn sich der Mittelwert der Windstärke merklich ändert, also eher selten.

Die DE 37 32 730 A1 zeigt eine Tragzapfenlagerung für die Rotorblätter von Windkraftanlagen. Bei einer Ausführungsform sind zwei in axialer Richtung bezüglich der Drehachse voneinander beabstandete Lagereinheiten offenbart, bestehend jeweils aus einem Schräggelenklager, einem Zylinderrrollenlager und einem Nadellager, wobei das Zylinderrollenlager Radialkräfte und das Nadellager Axialkräfte von einer äußeren Ringeinheit auf den Außenring des Schräggelenklagers übertragen, dessen Innenring diese Kräfte gemeinsam an die Nabe weitergibt. Um die beträchtlichen, von der Windlast herrührenden Kippmomente zu beherrschen, sind zwei Lagereinheiten vorgesehen. Da jede derartige Lagereinheit ein Axiallager und ein Radiallager aufweist, ruft jedes von der Windlast herrührende Kippmoment bzw. Wurzelbiegemoment ein Paar von einander entgegengesetzten Radialkräften hervor (an jedem Radiallager eine Radialkraft) sowie ein Paar von einander entgegengesetzten Axialkräften (an jedem Axiallager eines). Da sich hierbei das Kipp- bzw. Wurzelbiegemoment an allen vier Lagerstellen - bedingt durch die geometrischen Abstände der Lager zueinander - auf jeweils Kräfte in einer vergleichbaren Größenordnung aufteilt, sind alle Radial- und Axiallager für vergleichsweise große Belastungen auszulegen. Um diese Belastungen auf ein erträgliches Maß zu reduzieren, muß ein Mindestabstand der beiden Lagereinheiten eingehalten werden, welcher deren Trennung erforderlich macht. Die Verwendung von zwei Lagereinheiten mit insgesamt vier Lagerstellen, welche allesamt für hohe Beanspruchungen auszulegen sind, bringt aber einen erhöhten Konstruktionsaufwand mit sich, zumal jedes der Lager einen separaten Innen- und Außenring als Laufbahn benötigt.

Eine Lagereinheit gemäß dem Stand der Technik ist aus E. Hau, Windturbines, Springer, 2000 Seiten 228-234 bekant.

Aus den Nachteilen des beschriebenen Standes der Technik resultiert das die Erfindung initiierende Problem, ein Rotorblattlager für Windkraftanlagen zu schaffen, welches den besonderen Anforderungen an derartige Bauteile, insbesondere dem viel höheren Kippmoment bei starker Windlast als bspw. an den Rotorlagern, dauerhaft genügen und dem relativ schwierigen Belastungensfall Stand halten kann.

Die Lösung dieses Problems gelingt bei einer gattungsgemäßen Windkraftanlge gemäß Anspruch 1 durch zwei gegeneinander verdrehbare, ringförmige Elemente zum mittelbaren oder unmittelbaren Anschluß an die Rotorblattnabe einerseits und an ein Rotorblatt andererseits; wobei die Wälzkörper zweier axial gegeneinander versetzter Laufbahnen eine etwa zylindrische Gestalt aufweisen, d.h., mit je einer Mantelfläche, die rotationssymmetrisch zu genau einer Rotationsachse ist (Zylinder-, Kegel-, Nadel- oder Tonnenform); und wobei zur vollständigen Aufnahme des vom Winddruck auf das Rotorblatt herrührenden und auf die Lagereinheit einwirkenden Kippmoments, (sowie ggf. zur Aufnahme weiterer Kräfte wie Blattgewicht, Fliehkraft, etc., und/oder Momente, bspw. aufgrund der zeitweilig gegenüber der Vertikalen geneigten Stellung eines Rotorblatts), zwei zwischen den beiden Anschlußelementen angeordnete, axial gegeneinander versetzte Laufbahnen mit umlaufenden Wälzkörpern von etwa zylindrischer Gestalt dienen, wobei diese Wälzkörper derart ausgerichtet sind, dass ihre Rotationsachsen die Längsachse des betreffenden Rotorblattes unter einem Winkel schneiden, der zwischen 45° und 90° liegt.

Der Begriff "etwa zylindrische Gestalt" soll dabei nicht auf die reine, mathematisch definierte Zylinderform beschränkt sein, sondern alle diejenigen Rotationskörper umfassen, welche je eine Mantelfläche sowie zwei davon bspw. durch je eine Kante oder einen Bereich mit reduziertem Krümmungsradius unterscheidbare, endseitige Stirnflächen aufweisen, also bspw. Zylinder-, Kegel-, Nadel- oder Tonnenform, nicht dagegen Kugeln, welche überall einen konstanten Krümmungsradius aufweisen, so dass eine Mantelfläche nicht von Stirnflächen unterschieden werden kann und auch keine Rotationsachse gegenüber anderen Achsen bzw. Richtungen ausgezeichnet ist. Die Ausrichtung der Längsachsen dieser Wälzkörper berücksichtigt dabei die Kräfteverhältnisse an einem Rotorblatt, wobei - wie weiter unten erläutert wird - die Axialkräfte die Radialkräfte überwiegen. Dabei sind die beiden Laufbahn-Paare für die Wälzkörper derart an den beiden gegeneinander verdrehbaren Anschlußelementen angeordnet, dass eine solche Wälzkörperreihe axiale Druckkräfte in einer Richtung, die andere ebensolche Druckkräfte diametral gegenüberliegend und in entgegengesetzter Richtung entlang der gemeinsamen Drehachse wirkend übertragen kann. Hierbei liegt der Anordnung die Philosophie zugrunde, dass ein Rotorblatt auch einen nicht unerheblichen Durchmesser von bspw. 2 m bis 3 m hat, wobei die Angelpunkte am Blattlager für das von der Windlast herrührende Kippmoment sich etwa an einer durch die Mittellängsachse des Rotorblattes gehenden, quer zur Rotorachse verlaufenden Linie befindet. Es ist daher nicht erforderlich, zusätzlich zwei Radiallager vorzusehen. Außerdem hat das vom Wind ausgelöste, starke Kippmoment ein Biegemoment an der Wurzel des Rotorblattes um diese Angelpunkte bzw. um deren Verbindungslinie zur Folge, die sich an den gegenüber der die Angelpunkte definierenden Linie um 90° versetzten Bereichen des Blattlagers als axiale Zugkräfte bzw. - an der gegenüberliegenden Seite - als axiale Druckkräfte äußern. Diese axialen Kräfte nehmen die beiden erfindungsgemäßen Lagerstellen auf. Das vom Winddruck erzeugte Kippmoment wird ausschließlich durch ein Axialkraftpaar abgestützt. Es wird vermieden, dass Radialkräfte entstehen, welche die Lagerringe radial aufweiten und die Abdichtung erschweren. Dieser Vorteil wird gerade durch den Verzicht auf ein Radiallagerpaar bewirkt. Ferner wird es dank der Erfindung möglich, auch an den nur selten verstellten und daher belastungstechnisch sehr ungünstigen Blattlagern auf Schräggelenklager zu verzichten. Darüber hinaus ist kein Achszapfen erforderlich. Da das Kippmoment vollständig durch das Axialkraftpaar abgestützt ist, kann hier auf eine zweite Lagereinheit verzichtet werden, wodurch sich die Teileanzahl und damit auch die Anfälligkeit der Lagereinheit erheblich reduziert; die Bauweise wird äußerst kompakt, eine gegenseitige Einstellung mehrerer Lagerstellen entfällt.

Es liegt im Rahmen der Erfindung, dass die Wälzkörper zweier, axial gegeneinander versetzter Laufbahnen derart ausgerichtet sind, dass ihre Rotationsachsen etwa radial, d.h. etwa lotrecht, in Bezug auf die Längsachse des betreffenden Rotorblattes gerichtet sind. Solchenfalls werden von den Wälzkörpern dieser beiden Laufbahnen überhaupt keine Radialkräfte übertragen. Zum Zwecke einer Zentrierung des Rotorblattes kann - wie weiter unten noch ausgeführt wird - eine weitere Laufbahn vorgesehen sein für Wälzkörper, welche Radialkräfte abstützen. Es ergeben sich somit überschaubare und leicht zu beherrschende Kräfteverhältnisse.

Indem die beiden Anschlußelemente konzentrisch ineinander angeordnet sind, finden die beiden, in axialer Richtung gegeneinander versetzten Lagerstellen beide zwischen den Anschlußelementen Platz.

Es hat sich als günstig erwiesen, dass die beiden Anschlußelemente jeweils kranzförmig angeordnete Befestigungsbohrungen aufweisen. Hierbei kann es sich um mit Gewinde versehene Sacklochbohrungen oder bevorzugt um Durchgangsbohrungen für Schrauben, Bolzen od. ähnliches handeln, welche in ein Rotorblatt oder in die Rotornabe eingeschraubt oder daran verankert werden.

Vorzugsweise dienen einander abgewandte Stirnseiten der ringförmigen Anschlußelemente als Anschlußflächen zu der Rotorblattnabe einerseits und zu dem betreffenden Rotorblatt andererseits. Dadurch kann die Lagereinheit zwischen diesen beiden Bauteilen eingefügt werden.

Wenn der Ringspalt zwischen den beiden Anschlußelementen jeweils im Bereich der beiden Anschlußflächen abgedichtet ist, so laufen die Wälzkörper in einem gegenüber der Umgebung völlig abgeschlossenen Raum. Damit werden diese dem Einfluß von bspw. salzhaltiger und damit korrodierender Seeluft entzogen, das Eindringen von Staub wird verhindert, und das Schmierfett oder sonstige Schmiermittel werden im Bereich der Wälzkörper zurückgehalten.

Weitere Vorteile ergeben sich daraus, dass an der dem anderen Anschlußelement zugewandten Mantelseite wenigstens eines Anschlußelements wenigstens eine vorspringende, rundum laufende Nase vorgesehen ist. Über deren Seitenflächen kann eine Axialkraft in das betreffende Anschlußelement eingeleitet werden.

In Weiterverfolgung dieses Erfindungsgedankens kann ferner vorgesehen sein, dass die axiale Erstreckung der Nase dem axialen Abstand zwischen den Wälzkörpern der beiden Lager entspricht. Dadurch ist es möglich, die beiden kreisringförmigen Seitenflächen der Nase als Lauffläche für die etwa zylindrischen Wälzkörper je einer Lagerstelle zu verwenden bzw. zu gestalten.

Die Erfindung läßt sich dahingehend weiterbilden, dass die Laufbahnen für die etwa zylindrischen Wälzkörper entlang von etwa ebenen Kreisringflächen verlaufen, die von der Längsachse des betreffenden Rotorblattes etwa lotrecht durchsetzt werden. Ebene Flächen sind herstellungstechnisch einfacher zu realisieren als gewölbte Flächen; andererseits werden bei der Erfindung von den betreffenden Lagern nur Axialkräfte übertragen, so dass keine Veranlassung besteht, die Laufflächen mit einer Wölbung zu versehen, oder unter einem (großen) Winkel, bspw. in der Größenordnung von etwa 45° zur Längsachse des betreffenden Rotorblattes auszuführen, wie es bspw. bei Doppelschrägrollenlagern der Fall ist.

Vorzugsweise verfügt das erfindungsgemäße Lager über wenigstens eine dritte Lagerstelle, die zwischen zwei einander zugewandten Mantelflächen der beiden Anschlußelemente eingefügt ist. Im Gegensatz zu den vorab beschriebenen Lagern obliegt es letzterem, den mit der Windlast ebenfalls verbundenen Winddruck von dem betreffenden Rotorblatt auf die Rotornabe zu übertragen. Die Belastung des Lagers durch die Windkraft selbst ist zwar bedeutend geringer als die durch das von der Windlast herrührende Kippmoment verursachte Belastung, kann aber dennoch nicht vernachlässigt werden, weil die erfindungsgemäßen Lager mit etwa zylinderförmigen Wälzkörpern keine Radialkräfte übertragen können. Hierfür dient stattdessen das zusätzlich Lager.

Die Erfindung bevorzugt eine Anordnung, bei welcher sich die dritte Lagerstelle zwischen den beiden Laufbahnen für etwa zylindrische Wälzkörper befindet, welche derart ausgerichtet sind, dass ihre Rotationsachsen etwa radial in Bezug auf die Längsachse des betreffenden Rotorblattes orientiert sind. Das Ergebnis ist eine sehr platzsparende Bauweise, indem die dritte bzw. zusätzliche Lagerstelle in axialer Richtung zwischen den beiden ersteren plaziert wird, insbesondere im Bereich einer Nase zwischen den beiden ersten Lagern.

Die dritte Lagerstelle kann ebenfalls als Wälzlager ausgebildet sein, um eine möglichst leichtgängige Rotorblattverstellung zu gewährleisten, wobei die Rotationsachsen ihrer Wälzkörper etwa parallel zu der Längsachse des Rotorblatts sind. Da andererseits die von dem dritten Lager zu übertragenden Kräfte geringer sind als die von den beiden zuerst beschriebenen, kann ein Wälzkörper des dritten Lagers ein kleineres Volumen aufweisen als ein Wälzkörper eines der Lager mit den Wälzkörpern in etwa radialer Orientierung der Rotationsachse gegenüber der Längsachse des Rotorblatts.

Andererseits besteht auch die Möglichkeit, die dritte Lagerstelle als Gleitlager auszubilden. Denn da dieses Lager nur vergleichsweise geringen Kräften ausgesetzt ist, werden darin auch keine großen Reibungskräfte erzeugt.

Eine weitere Folge der geringeren Belastung der dritten bzw. zusätzlichen Lagerstelle ist, dass die effektive Breite der Laufbahn oder Gleitfläche einer Lagerstelle, die zwischen zwei einander zugewandten Mantelflächen der beiden Anschlußelemente eingefügt ist, geringer dimensioniert werden kann als die effektive Breite einer Laufbahn, welche in Kontakt mit einem Wälzkörper tritt, dessen Rotationsachse etwa radial in Bezug auf die Längsachse des betreffenden Rotorblattes gerichtet ist.

Um den Zusammenbau der beiden ringförmigen Anschlußelemente samt dazwischen angeordneter Wälzkörper und ggf. Abstandhalter bzw. Wälzkörperkäfige zu erleichtern, empfiehlt die Erfindung, ein Anschlußelement entlang einer etwa lotrecht zu der Längsachse des Rotorblatts orientierten Ebene unterteilt auszuführen, so dass die beiden Hälften zum Einsetzen der Wälzkörper voneinander entfernt werden können.

Damit die Wälzkörper gerade unter Last möglichst verkantungsfrei parallel gegenüber den Laufbahnen ausgerichtet sind, kann der Querschnitt der zum Einlegen von Wälzkörpern vorgesehenen Laufbahnen derart gestaltet sein, dass er zumindest bereichsweise nicht dem Längsschnitt eines dort einzulegenden Wälzkörpers entspricht, sondern vorzugsweise in axialer Richtung enger ist und damit gegen die Wälzkörper vorgespannt ist. Weitet sich die Laufbahn dann - einerseits unter dem Einfluß der Wälzkörper selbst, andererseits aber evtl. auch unter Belastung - auf, so liegt sie dennoch formschlüssig an den Wälzkörpern an, so dass diese sich nicht verkanten können. Zu diesem Zweck kann die axiale Erstreckung des Querschnitts der zum Einlegen von Wälzkörpern vorgesehenen Laufbahnen zumindest bereichsweise kleiner gewählt werden als der Durchmesser des damit korrespondierenen Abschnitts eines Wälzkörpers.

Um die Lebensdauer des erfindungsgemäßen Lagers zu erhöhen, sollten die Wälzkörper, deren Rotationsachsen etwa radial in Bezug auf die Längsachse des betreffenden Rotorblattes gerichtet sind, zumindest einen bombierten Übergangsbereich zwischen der Mantelfläche und wenigstens einer angrenzenden Stirnseite aufweisen, d.h., eine Abflachung oder Abrundung. Dadurch wird eine Kantenpressung gegen die Laufbahn bei elastischer Verformung der Lagereinheit im Betrieb toleriert, indem auch für diesen Fall im Bereich des abgerundeten Übergangs eine ausreichende Kontaktfläche zu den Laufflächen sichergestellt ist.

Eine andere Maßnahme zur Reduzierung des Verschleißes in der erfindungsgemäßen Lagerung besteht darin, dass die Wälzkörper, deren Rotationsachsen etwa radial in Bezug auf die Längsachse des betreffenden Rotorblattes gerichtet sind, zumindest eine kalottenförmige Stirnseite aufweisen. Damit wird die Gleitfläche vergrößert, indem die radial außen liegenden Stirnflächen eines Wälzkörpers an der Innenseite des dortigen Anschlußelements entlanggleiten und daher nur einem geringen Verschleiß unterliegen. In diesem Sinne ist es von Vorteil, wenn der Wölbungsradius der kalottenförmigen Stirnseite etwa dem Radius der Innenseite des Außenrings entspricht oder kleiner ist als jener.

Verschleißmindernd wirkt auch eine Erhöhung der Elastizität der Wälzkörper, weil diese dann bei hoher Belastung und damit hoher elastischer Verformung der Lagereinheit zumindest in begrenztem Umfang elastisch nachgeben und anschließend ohne bleibende Verformung wieder zurückfedern können. Die Elastizität wird bspw. dadurch erhöht, dass die Wälzkörper, deren Rotationsachsen etwa radial in Bezug auf die Längsachse des betreffenden Rotorblatts gerichtet sind, als Hohlkörper ausgebildet sind. Dies läßt sich bspw. durch koaxiales Durchbohren entlang ihrer Rotationsachse erreichen. Je nach Dicke der Bohrung bzw. des verbleibenden Mantels kann die Elastizität genau eingestellt werden.

Solche Hohlräume können dafür verwendet werden, um benachbarte, hohle Wälzkörper durch stirnseitige Verbindungselemente aneinander zu führen und so auf einem definierten Abstand zu halten, indem diese Verbindungselemente zumindest bereichsweise in die Hohlräume der Wälzkörper eingreifen. Sie können im einfachsten Fall bspw. die Gestalt C-förmiger Klammern aufweisen, deren Enden in je eine zentrale bzw. koaxiale Bohrung zweier benachbarter rollen- bzw. etwa zylinderförmigen Wälzkörper eingreifen.

Derartige Verbindungselemente bieten wiederum die Möglichkeit, untereinander zu einem oder mehreren Käfigen oder Käfigsegmenten zusammengefaßt zu werden. Solche Käfigsegmente erstrecken sich bspw. nur über einen begrenzten Zentrumswinkel und nicht über den gesamten Umfang einer Wälzkörperreihe, und/oder sie umgreifen die Wälzkörper an deren innenliegenden oder an ihren außenliegenden Stirnseiten oder beidseitig.

Alternativ dazu läßt sich zwischen benachbarten Wälzkörpern je ein Distanzstück einfügen, dessen radialer Längsschnitt kleiner oder genauso groß ist als/wie der radiale Längsschnitt eines Wälzkörpers. In diesem Fall können die Wälzkörper selbst jeweils länger und also mit einem maximalen Volumen ausgebildet sein, so dass größere Kräfte übertragen werden können, da in einem festgelegten Einbauraum kein Platz für einen Käfig verloren geht.

Im Rahmen einer ersten Ausführungsform der Erfindung ist an keinem Anschlußelement eine Verzahnung vorgesehen; solchenfalls kann die Rotorblattverstellung bspw. mittels eines Hydraulikzylinders erfolgen, der an dem Rotorblatt exzentrisch zu dessen Längsachse angelenkt ist und sich an der Rotornabe abstützt, oder umgekehrt.

Andererseits kann zum Zweck der Rotorblattverstellung auch an einem Anschlußelement, vorzugsweise an der Innenseite des Innenrings, eine Verzahnung vorgesehen sein, zum Eingriff eines verzahnten Abtriebselementes eines Antriebsmotors, bspw. eines Ritzels.

Eine erfindungsgemäße Windkraftanlage bringt eine Reihe von Vorteilen mit sich: Die gerade bei den Rotorblättern von Windkraftanlagen auftretenden, hohen Axialkräfte belasten die Rotorblattlagerung sehr stark und können von zylinder-, kegel-, nadel- oder tonnenförmigen Wälzkörpern mit linienförmigen Berührungsbereichen zu den Laufbahnen weit besser übertragen werden als von kugelförmigen Wälzkörpern mit punktförmigen Berührungsbereichen zu den Laufbahnen. Die hohen Axialkräfte ergeben sich vor allem aus der immensen Länge der Rotorblätter, die sich an der höchsten Stelle ihrer Umlaufbahn viele Meter oberhalb der Turmspitze befinden, im Gegensatz bspw. zu im Wasser laufenden Schiffspropellern, welche nur eine geringe Radialerstreckung aufweisen und außerdem - bedingt durch ihre meist paarweise Anordnung - einer erheblichen, radialen Sogwirkung ausgesetzt sind. Eine solche Radialkraft tritt bei Windkraftanlagen, wo üblicherweise nur ein einziger Rotor pro Turm vorgesehen ist, nicht auf. Andererseits können mit zunehmender Höhe einer Windkraftanlage über NN die Windkräfte bspw. während eines Sturms, Orkans oder gar Wirbelsturms teilweise äußerst hohe Geschwindigkeiten von bis zu mehreren 100 km/h erreichen, was zu extremen Axialbelastungen der Rotorblattlager führt, die konstruktiv berücksichtigt werden müssen. Solche Strömungsgeschwindigkeiten und vor allem die damit verbundenen Diskontinuitäten - Böen, Wirbel, etc. - sind in anderen Medien, bspw. Wasser, völlig undenkbar, so dass sich dort dieses Problem überhaupt nicht stellt.

Das in Anspruch 30 definierte erfindungsgemäße Verfahren zum Betrieb einer Windkraftanlage nach einem der Ansprüche 1-29 zeichnet sich dadurch aus, dass das/die betreffende(n) Rotorblatt (-blätter) während des Betriebs der Windkraftanlage beständig um seine/ihre Längsachse(n) verdreht wird/werden, also auch dann, wenn eine gleichbleibende Windgeschwindigkeit eine Blattverstellung nicht notwendig macht.

Eine beständige, d.h., ununterbrochene (kleine) Verdrehung der Rotorblätter unterstützt die erfindungsgemäße Rotorblatt-Lagerung, indem sich der Schmierfilm zwischen Wälzkörpern und Laufflächen fortwährend regenerieren kann und damit einem zeitweisen Trockenlauf vorgebeugt wird. Dies gilt insbesondere auch für den Fall, dass sich bei gleich bleibenden Windverhältnissen der Blattverstellwinkel kaum ändert und die Blattlager somit in einer Stellung verharren. Selbst bei einem solchen quasikonstanten Blattverstellwinkel kann es zu einem nachteiligen Laufbahnverschleiß in den Blattlagern kommen, da beim Vorbeistreichen des Rotorblattes am Turm durch aerodynamischen Sog und Druck eine Kippmomentbelastung auf die stillstehenden (nicht drehenden) Blattlager einwirkt, die ohne das erfindungsgemäße Verfahren den Schmierfilm zwischen den Wälzkörpern und der Laufbahn aufheben würde und dann Laufbahnschäden durch so genanntes "False Brinelling" auftreten würden, also Degeneration der Laufbahn durch hohe Hertzsche Pressung der Wälzkörper auf die Laufbahn(en) infolge auf das Wälzlager wiederkehrend einwirkender wechselnder Lasten, die während des Stillstandes des Wälzlagers schnell zur Schmierfilmverdrängung führen.

Dieses sogenannte "False Brinelling" tritt dann auf, wenn die Windkraftanlage aus welchen Gründen auch immer, bspw. bei Wartungs-/Reparaturarbeiten oder während einer Sturmwindphase, abgeschaltet ist und der Rotor mit den Blättern langsam frei dreht ("freewheeling"), ohne elektrische Energie zu generieren. Auch in diesem Fall kann die Anwendung des erfindungsgemäßen Verfahrens während der Stillstandszeiten der Windkraftanlage Laufbahnschäden durch False Brinelling vorbeugen bzw. verhindern.

Ein weiterer Vorteil des erfindungsgemäßen Verfahrens ist die Verhinderung des Laufbahnverschleißes durch die so genannte "Fretting Corrosion". Diese tritt auf durch elastische Verformung der Lagereinheit/deren Anschlußkonstruktion und einer damit oft hervorgerufenen Gleitbewegung der Wälzkörper in Richtung von deren Längsachse und damit entlang der Laufbahn. Das erfindungsgemäße Verfahren gewährleistet immer auch eine Rollbewegung der Wälzkörper und damit den Aufbau des notwendigen Schmierfilmes zwischen Wälzkörpern und Laufflächen auch dann, wenn die Wälzkörper nachteiligen Gleitbewegungen entlang ihrer Längsachse ausgesetzt sind und zwar unabhängig davon, ob die Windkraftanlage in Betrieb ist oder nicht, oder ob die Rotorblätter verstellt werden müssen oder nicht, so lange eben, wie die beständige. d.h. ununterbrochene (kleine) Verstellung der Rotorblätter vorteilhafterweise durchgeführt wird.

Die beständige Verdrehung wird durch eine entsprechende Ansteuerung des Motors oder Zylinders für die Rotorblattverstellung bewirkt. Hierbei bietet es sich an, als beständige Verdrehung eine periodische Bewegung einzuprägen, weil eine daraus folgende, oszillierende Bewegung eines Rotorblatts einen besonders günstigen Schmierfilmaufbau zwischen Wälzkörpern und Laufbahnen zur Folge hat.

Die Erfindung läßt sich dadurch optimieren, dass die Periode der oszillierenden Verdrehung des Rotorblattes der Umdrehungsperiode des Windrades entspricht, solange letztere einen vorgegebenen, unteren Grenzwert nicht unterschreitet. Dadurch wird eine gegenseitige Angleichung der von den unterschiedlichen Rotorblättern hervorgerufenen Last erreicht, zwecks Minimierung der resultierenden Strukturlast.

Andererseits sollte bei stillstehendem Windrad (bspw. bei Flaute), aber auch dann, wenn die Umdrehungsperiode des Windrades einen vorgegebenen, unteren Grenzwert unterschreitet, die periodische Bewegung fortgesetzt werden, insbesonder mit etwa konstanter Periode. Dies bedingt im unteren Drehzahlbereich des Windrades ggf. eine Entkoppelung der periodischen Verstellung von der Drehzahl des Windrades, bspw. dergestalt, dass eine unterste Verstellfrequenz niemals unterschritten wird. Diese unterste Verstellfrequenz kann beim Anlauf des Windrades ggf. so lange fortgesetzt werden bis sich schließlich eine mit der Winkellage des Windrads synchrone Winkelposition ergibt, um anschließend die Verstellung des Anstellwinkels dieser Winkelposition des Windrads nachzuführen.

Während der periodischen Verdrehung eines Rotorblatts oszilliert dessen Anstellwinkel zwischen zwei Extremwerten. Eine gegenseitige Kompensation unterschiedlicher Auslenkungen der verschiedenen Rotorblätter kann erreicht werden, wenn die Maxima der periodischen Anstellwinkel-Auslenkung für alle Rotorblätter jeweils an einem vorgegebenen Drehwinkel des betreffenden Rotorblattes um die Rotorachse erreicht werden. Eine solche, etwa sinusförmige Auslenkung führt bspw. bei drei Rotorblättern dazu, dass sich zu jedem Zeitpunkt die periodischen Abweichungen benachbarter Rotorblätter von dem Mittelwert gegeneinander um 120° unterscheiden, allgemein, d.h. bei n Rotorblättern, um 360°/n.

Sehr gute Ergebnisse lassen sich erzielen, wenn die Extrema der periodischen Anstellwinkel-Auslenkung in etwa an dem höchsten und am tiefsten Punkt des Rotorblattes erreicht werden. Dabei sollte die Anstellung des Rotorblattes am höchsten Punkt einer größeren Windstärke, die an dem niedrigsten Punkt einer verringerten Windstärke entsprechen. Denn tatsächlich ist naturgemäß die Windstärke in zunehmender Höhe größer als in Bodennähe.

Eine Optimierung des einzelnen Blattanstellwinkels wird erreicht, wenn die Amplitude der periodischen Auslenkung des Rotorblatt-Anstellwinkels von der mit zunehmender Höhe steigenden Windgeschwindigkeit abhängt, bspw. etwa proportional zu jener ist. Bei einer solchen Steuerung sollte Sorge dafür getragen werden, dass die Amplitude der Auslenkung einen unteren Grenzwert nicht unterschreitet, selbst wenn die Windgeschwindigkeit bzw. die Differenz zwischen der Windgeschwindigkeit im oberen und unteren Bereich des Windrades gegen Null geht (bspw. bei absoluter Windstille).

Schließlich entspricht es der Lehre der Erfindung, dass der Mittelwert zwischen den Extremwerten der Verdrehung von der Windgeschwindigkeit abhängt. Wie auch bisher, so wird mit dem Mittelwert des Rotorblatt-Anstellwinkels eine optimale Anpassung der Rotorblattstellung an die konkreten Windverhältnisse angestrebt. Indem als Mittelwert vorzugsweise der bisher statisch eingestellte Rotorblatt-Anstellwinkel gewählt wird, ergeben sich für jedes einzelne Rotorblatt optimale Verhältnisse.

Weitere Merkmale, Eigenschaften, Vorteile und Wirkungen auf der Basis der Erfindung ergeben sich anhand der folgenden Beschreibung einiger bevorzugter Ausführungsformen der Erfindung sowie anhand der Zeichnung. Hierbei zeigen:

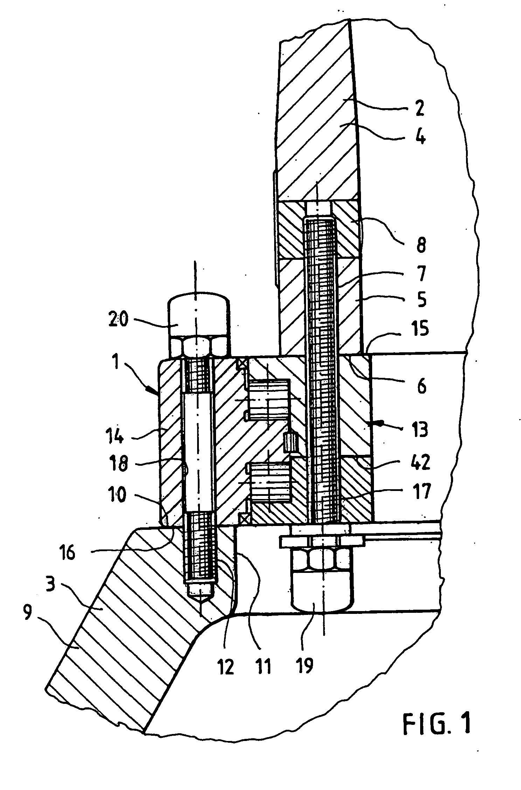

- Fig. 1: einen Schnitt durch eine erfindungsgemäße Rotorblattlagereinheit in eingebautem Zustand, teilweise abgebrochen;
- Fig. 2: die Blattlagereinheit aus Fig. 1 in ausgebautem Zustand, ebenfalls abgebrochen;
- Fig. 3: eine Ansicht auf die Mantelfläche eines Wälzkörpers der Blattlagereinheit aus den Fig. 1 und 2;
- Fig. 4: eine der Fig. 1 entsprechende Ansicht auf eine andere Ausführungsform der Erfindung; sowie

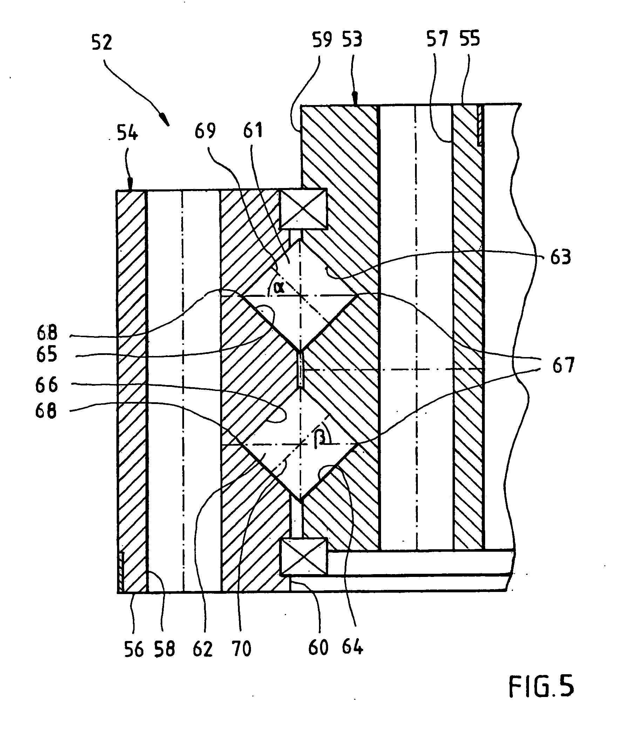

- Fig. 5: eine der Fig. 2 entsprechende Darstellung einer wiederum abgewandelten Ausführungsform der Erfindung.

Ein erfindungsgemäßes Blattlager 1 gelangt bei Windkraftanlagen zum Einsatz und dient dort dem verdrehbaren Anschluß eines Rotorblattes 2 an der Rotornabe 3.

Das Rotorblatt 2 besteht üblicherweise aus Faserverbundwerkstoff und ist nach Art eines Flügels gestaltet. Zur Gewichtsersparnis ist das Rotorblatt 2 als einen inneren Hohlraum umgebende Mantelfläche 4 ausgebildet, die an dem rückwärtigen Ende 5 des Rotorblattes 2 in einen zylindermantelförmigen Verlauf mit einem Durchmesser von bspw. etwa 2 m bis 3 m übergeht. Demzufolge hat die ebene rückwärtige Anschlußfläche 6 einen kreisringförmigen Umriß. In dieser Anschlußfläche 6 befinden sich kranzförmig angeordnete Sacklochbohrungen 7, welche jeweils bis zu einem in das Rotorblatt 2 eingesetzten Verankerungskörper 8 aus einem harten Material führen, bspw. aus Eisen. Die Sacklochbohrungen 7 setzen sich in den Verankerungskörpern 8 als Innengewindebohrungen fort.

Die Rotornabe 3 verfügt über eine steife Ausbuchtung 9 mit je einer ebenen, kreisringförmigen Anschlußfläche 10 für jedes Rotorblatt 2, welche eine kreisförmige Öffnung 11 umgibt. Auch in diesen Anschlußflächen 10 befinden sich kranzförmig angeordnete Sacklochbohrungen 12, die mit einem Innengewinde versehen sind.

Bei der dargestellten Ausführungsform ist der Innendurchmesser einer solchen kreisförmigen Öffnung 11 größer als der Außendurchmesser des Rotorblattes 2 an dessen rückwärtigem Ende 5. Zwischen den beiden Anschlußflächen 6, 10 befindet sich die Lagereinheit 1, die zwei ringförmige, zueinander konzentrische und gegeneinander verdrehbare Anschlußelemente 13, 14 aufweist. Je eine von zwei voneinander abgewandte Stirnseiten 15, 16 dieser Anschlußelemente 13, 14 liegen jeweils vollflächig an je einer Anschlußfläche 6, 10 an.

Zur festen Verbindung der Anschlußelemente 13, 14 mit dem Rotorblatt 2 einerseits und der Rotornabe 3 andererseits sind in den beiden Anschlußelementen 13, 14 jeweils kranzförmig angeordnete Durchgangsbohrungen 17, 18 vorgesehen. Die Durchgangsbohrungen 17 des innenliegenden Anschlußelements 13 stimmen hinsichtlich Anzahl, Durchmesser und Ausrichtung mit den Sacklochbohrungen 7 in der Anschlußfläche 6 des Rotorblattes 2 derart überein, dass je eine Durchgangsbohrung 17 mit je einer Sacklochbohrung 7 fluchtet und das Einstecken eines Stehbolzens 19 erlaubt. Sind alle Muttern auf den Stehbolzen 19 fest angezogen, ist der Innenring 13 fest mit dem rückwärtigen Ende 5 des Rotorblattes 2 verbunden, und zwar vorzugsweise so, dass die Mittelachse des Innenrings 13 mit der Längsachse des Rotorblattes 2 fluchtet.

Die Durchgangsbohrungen 18 des äußeren Anschlußelements 14 entsprechen hinsichtlich Anzahl, Durchmesser und Ausrichtung den Sacklochbohrungen 12 in der Anschlußfläche 10 der Rotornabe 3 derart überein, dass je eine Durchgangsbohrung 18 mit je einer Sacklochbohrung 12 fluchtend ausgerichtet ist und das Hindurchstecken eines Stehbolzens 20 ermöglicht. Sind alle Muttern auf den Stehbolzen 20 fest angezogen, ist der Außenring 14 fest mit der Ausbuchtung 9 der Rotornabe 3 verbunden.

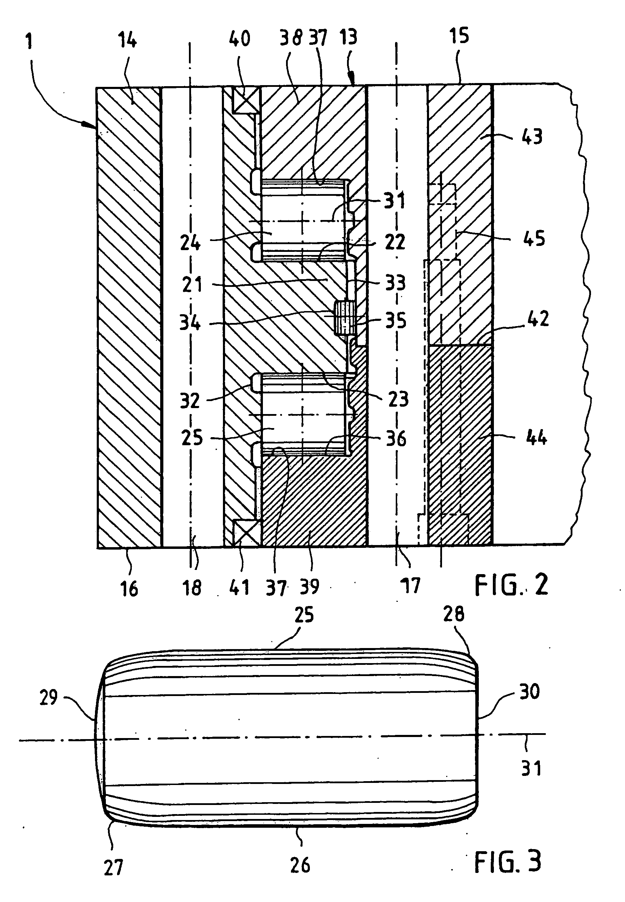

Die weiteren Einzelheiten der Lagereinheit 1 sind leichter auf der Darstellung gemäß Fig. 2 zu erkennen. Deutlich sichtbar ist eine an der Innenseite des äußeren Anschlußelements 14 angeordnete, rundumlaufende, bundförmige Nase 21 mit etwa rechteckigem Querschnitt. Die kreisringförmigen Seitenflächen 22, 23 dieser Nase 21 dienen als Laufflächen für je eine Reihe von Wälzkörpern 24, 25.

Ein solcher Wälzkörper 24, 25 ist in Fig. 3 isoliert wiedergegeben. Man erkennt die etwa zylindrische Form mit einer im Mittelbereich zylindrischen Mantelfläche 26 und den bombierten, d.h. abgerundeten Übergängen 27, 28 in die Stirnseiten 29, 30. Alle Wälzkörper 24, 25 sind derart orientiert, dass ihre Längsachsen 31 radial zu der Längsachse des Rotorblattes 2 verlaufen. Demnach gibt es an jedem Wälzkörper 24, 25 je eine radial außen liegende Stirnseite 29 und eine radial innen liegende Stirnseite 30. Die jeweils außen liegende Stirnseite 29 ist konvex nach außen gewölbt, und zwar kalottenförmig. Der Wölbungsradius dieser kalottenförmigen Erhebung entspricht etwa dem Innendurchmesser des Außenrings 14 seitlich neben der Nase 21 bzw. axial gegenüber dieser versetzt, oder ist geringfügig kleiner als letztere. Daher gibt es im Bereich des Umfangs 27 dieser Stirnfläche keine Berührung mit der Innenseite des Außenrings 14 und damit auch keine Reibung. Zu diesem Zweck können an den betreffenden Stellen des Außenrings 14 zusätzliche, rundumlaufende Vertiefungen 32 vorgesehen sein.

Die radiale Erstreckung der Nase 21 bezüglich der Lagerdrehachse entspricht etwa der Länge eines Wälzkörpers 24, 25. In der innenliegenden Stirnseite 33 der Nase 21 ist eine Lauffläche 34 in Form einer rinnenförmigen Vertiefung für eine weitere Lagerstelle 35 vorgesehen, die vorzugsweise ebenfalls nach Art eines Zylinderrollenlagers aufgebaut ist. Die Breite dieser Lauffläche 34 ist kleiner als die Breite der Laufflächen 22, 23 der anderen beiden Lagerstellen 24, 25.

Das radial innen liegende Anschlußelement 13 weist an seiner Außenseite eine rundumlaufende Einsenkung 36 von etwa rechteckigem Querschnitt auf. Während die Tiefe dieser Einsenkung 36 etwa der Länge eines Wälzkörpers 24, 25 entspricht, ergibt sich ihre Breite aus der Summe der Durchmesser eines Wälzkörpers 24 der oberen, dem Rotorblatt 2 zugewandten Lagerstelle und eines Wälzkörpers 25 der unteren, der Rotornabe 3 zugewandten Lagerstelle zuzüglich der axialen Erstreckung der dazwischen liegenden Nase 21. Wenn diese Bedingung möglichst exakt eingehalten wird, rollen die Wälzkörper 24, 25 spielfrei zwischen den Seitenflächen 22, 23 der Nase 21 einerseits und den Seitenflächen 37 der Einsenkung 36 ab.

Die Einsenkung 36 wird seitlich bzw. in axialer Richtung begrenzt durch je eine bundförmig radial nach außen vorspringende Nase 38, 39. Zwischen diesen und den korrespondierenden Bereichen der Innenseite des Außenrings befindet sich je ein ringförmiges Abdichtelement 40, 41.

Der Innenring 13 ist entlang einer von der Lagerdrehachse lotrecht durchsetzten Mittelbene 42 unterteilt in zwei Hälften, eine obere 43 und eine untere 44. Diese Hälften 43, 44 werden beim Zusammenbau des Blattlagers 1 voneinander entfernt und erst nach Einsetzen der Wälzkörper 24, 25, 35 wieder zusammengesetzt und mittels axial gerichteter Schrauben 45 aneinander festgelegt. Eine der beiden Hälften 43, 44 enthält auch die radial innenliegende Lauffläche für die dritte Lagerstelle 35.

Die Wälzkörper 24, 25, 35 je eines Wälzlagers werden auf Abstand gehalten durch eingelegte Abstandselemente oder durch Käfige.

Die Wälzkörper 24, 25, deren Längs- oder Rotationsachsen 31 radial bezüglich der Lagerdrehachse orientiert sind, dienen vornehmlich der Übertragung relativ hoher Kipp- oder Blattwurzelbiegemomente, welche an dem Rotorblatt 2 durch den Winddruck hervorgerufen werden. Die kleineren Wälzkörper 35 übertragen den Winddruck vom Rotorblatt 2 auf die Blattnabe 3.

Eine Veränderung des Rotorblattanstellwinkels wird bei dieser Ausführungsform bspw. von einem Hydraulikzylinder bewirkt, der an dem Rotorblatt 2 einerseits und der Rotornabe 3 andererseits angelenkt ist. Vorzugsweise wird dieser Zylinder ständig verstellt, damit sich die Wälzkörper 24, 25, 35 beständig bewegen und dadurch der diese bedeckende Schmierfilm aufrechterhalten wird.

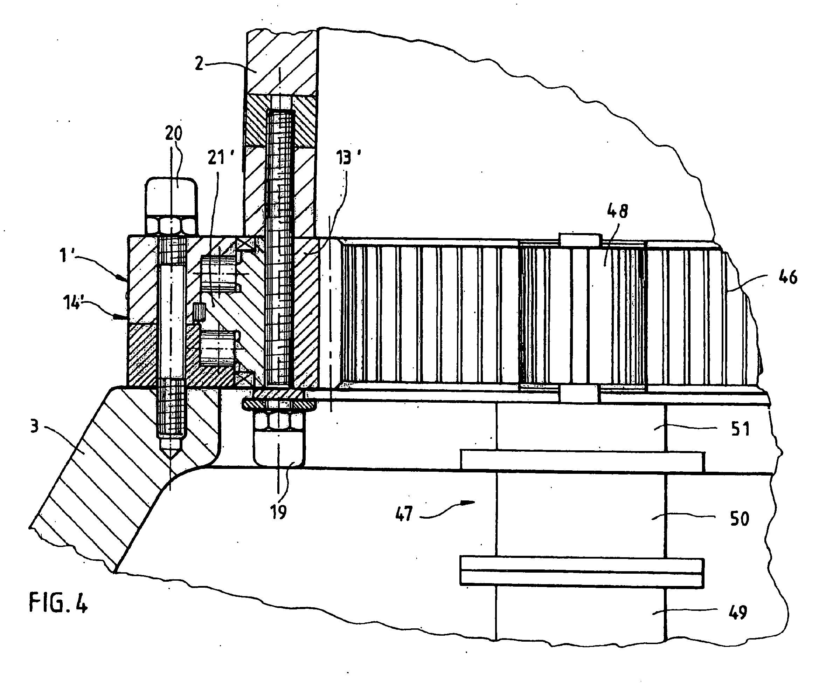

In Fig. 4 ist eine andere Lagereinheit 1' mit einer alternativen Mechanik zur Veränderung des Rotorblattanstellwinkels wiedergegeben. Zu diesem Zweck ist an der Innenseite des Innenrings 13' eine Innenverzahnung 46 vorgesehen. Eine Antriebseinheit 47 ist gehäuseseitig in der Ausnehmung 11 der Ausbuchtung 9 der Rotornabe 3 festgelegt, während ein Abtriebsritzel 48 mit der Innenverzahnung 46 kämmt. Dadurch wird der Innenring 13' und mit diesem das Rotorblatt 2 gegenüber der Rotornabe 3 verdreht. Die Antriebseinheit 47 kann aus einem Motor 49, einem nachgeschalteten Getriebe 50 und einer Bremse 51 bestehen. Vorzugsweise wird auch hierbei der Motor 49 beständig verstellt, um den Schmierfilm an den Wälzkörpern 24, 25, 35 aufrechtzuerhalten. Damit der die Innenverzahnung 46 tragende Ring nicht aus mehreren Teilen zusammengebaut werden muß, was zusätzliche Justierungsprobleme mit sich bringt, ist bei dieser Ausführungsform 1' die Unterteilung 42' an dem Außenring 14' vorzusehen und nicht an dem Innenring 13'; dementsprechend befindet sich die zentrale Nase 21' an der Außenseite des Innenrings 13' anstatt an der Innenseite des Außenrings 14'.

Die Erfindung erlaubt eine Reihe weiterer Modifikationen;

Die Ringe 13, 14 können in axialer Richtung gegeneinander versetzt sein oder unterschiedliche, axiale Erstreckungen aufweisen. Einige oder alle Durchgangsbohrungen 17, 18 können durch Sacklochbohrungen ersetzt sein.

Der an der Nabe 3 befestigte Außenring 14 kann eine Einsenkung 36 aufweisen, wenn umgekehrt der Innenring 13 eine Nase 21 audfweist.

Der Außenring 14 könnte eine Außenverzahnung ähnlich der des Innenrings 13', 46 aufweisen und mit dem Rotorblatt 2 verbunden sein, wenn umgekehrt der Innenring 13 mit der Rotornabe 3 verbunden wäre.

Der Ring 44 könnte mit dem Rotorblatt 2 verbunden sein, wenn umgekehrt Ring 43 als Auflagefläche der Mutter des Stehbolzens 19 diente.

Anstelle der Stehbolzen 19, 20 könnten Schrauben, insbesondere Maschinenschrauben, verwendet werden.

Das Blattlager 52 für eine Windkraftanlage verfügt ebenfalls über zwei ringförmige, zueinander konzentrische Anschlußelemente 53, 54. Je eine von zwei voneinander abgewandte Stirnseiten 55, 56 dieser Anschlußelemente 53, 54 dienen jeweils als Anschlußfläche für ein Rotorblatt einerseits und für die Rotornabe andererseits. Bei der dargestellten Ausführungsform erheben sich diese Anschlußflächen 55, 56 jeweils geringfügig über die benachbarte Stirnseite des jeweils anderen Anschlußelements 54, 53.

Jedes Anschlußelement 53, 54 wird von mehreren, kranzförmig verteilt angeordneten Durchgangsbohrungen 57, 58 durchsetzt, welche jeweils lotrecht zu der betreffenden Anschlußfläche 55, 56 orientiert sind und zum Hindurchstecken von Befestigungsschrauben und/oder -bolzen dienen.

Zwischen den einander zugewandten Mantelflächen 59, 60 der beiden ringförmigen Anschlußelemente 53, 54 befindet sich ein radialer Abstand bzw. Spalt, so dass sich die Anschlußelemente 53, 54 frei gegeneinander verdrehen können. Dieser radiale Abstand wird konstant gehalten durch eine Vielzahl von etwa zylinderförmigen Wälzkörpern, 61, 62, die jeweils zwischen einer von zwei Laufbahnen 63, 64 in der äußeren Mantelfläche 59 des radial innenliegenden Anschlußelements 53 einerseits und einer von zwei Laufbahnen 65, 66 in der inneren Mantelfläche 60 des radial außenliegenden Anschlußelements 54 andererseits abrollen. Dabei sind die beiden Laufbahnen 63, 64; 65, 66 eines Anschlußelements 53, 54 in axialer Richtung, d.h., parallel zu der gemeinsamen Verdrehachse des Lagers 52, gegeneinander versetzt.

Alle Laufbahnen 63 - 66 haben die Gestalt einer rundumlaufenden Nut von jeweils etwa dreieckigem Querschnitt, vorzugsweise von der Gestalt eines gleichschenkligen Dreiecks mit einem rechten Winkel an der Spitze 67, 68. Diese Spitze 67, 68 entspricht dabei einer rundumlaufenden Hohlkehle, die dem Grund der betreffenden Nut 63 - 66 entspricht.

Die Abstände zwischen dem Nutgrund 67, 68 der beiden Laufbahnen 63, 64; 65, 66 desselben Anschlußelements 53, 54 sind bei beiden Anschlußelementen 53, 54 gleich groß, so dass die Wälzkörper 61, 62 ohne zu zwängen frei abrollen können.

Vorzugsweise ist die Länge eines Wälzkörpers 61, 62 gleich groß als sein Durchmesser, so dass die Mantelflächen der Wälzkörper 61, 62 an den betreffenden Laufflächen 63 - 66 linienförmig anliegen, ihre Stirnseiten dagegen nicht.

Vorzugsweise sind die Rotationsachsen 69 der Wälzkörper 61 eines Laufbahnpaares 63, 65 nach außen ansteigend orientiert, bspw. um einen Winkel α von etwa 45° gegenüber der von der Drehachse des Lagers 52 lotrecht durchsetzten Lagergrundebene, während die Rotationsachsen 70 der Wälzkörper 62 des anderen Laufbahnpaares 64, 66 nach innen ansteigen, bspw. um einen Winkel β von etwa 45° gegenüber der Lagergrundebene. Dabei spielt es für die Erfindung keine Rolle, ob die Wälzkörper 61, 62 in einer X-Anordnung ausgerichtet sind (wobei die Rotationsachsen 69, 70 aller Wälzkörper 61, 62 in einer Hauptebene des Lagers X-förmig zueinander ausgerichtet sind, also sich jeweils paarweise radial innerhalb des Lagerspaltes schneiden, vergleichbar mit > <), oder in einer O-Anordnung (wobei die Rotationsachsen 69, 70 aller Wälzkörper 61, 62 in einer Hauptebene des Lagers O-förmig zueinander ausgerichtet sind, also sich jeweils paarweise radial außerhalb des Lagerspaltes schneiden, vergleichbar mit < >).

Diese Anordnung erlaubt, dass die Wälzkörper 61, 62 sowohl axiale Kräfte zwischen den Anschlußflächen 55, 56 als auch radiale Kräfte zwischen den einander zugewandten Mantelflächen 59, 60 beider Anschlußelemente 53, 54 übertragen können.

## Patentansprüche

1. Windkraftanlage, umfassend ein Windrad mit wenigstens einem langgestreckten Rotorblatt (2), welches an der Rotornabe (3) des Windrades mittels einer Lagereinheit (1;1';52) gelagert ist, die zwei gegeneinander verdrehbare, ringförmige Elemente (13,14;13',14';53,54) aufweist zum mittelbaren oder unmittelbaren Anschluss an dem rückwärtigen Ende (5) des betreffenden Rotorblattes (2) einerseits und an der Rotornabe (3) des Windrades andererseits, sowie wenigstens zwei axial gegeneinander versetzte Laufbahnen mit umlaufenden Wälzkörpern (24,25;61,62), wobei die Wälzkörper (24,25;61,62) zweier axial gegeneinander versetzter Laufbahnen eine etwa zylindrische Gestalt aufweisen, d.h., mit je einer Mantelfläche (26), die rotationssymmetrisch zu genau einer Rotationsachse (31;69,70) ist, insbesondere mit Zylinder-, Kegel-, Nadel- oder Tonnenform, wobei diese Wälzkörper (24,25;61,62) derart ausgerichtet sind, dass ihre Rotationsachsen (31;69,70) die Längsachse des betreffenden Rotorblattes (2) unter einem Winkel schneiden, der zwischen 30° und 90° liegt, und wobei das Rotorblatt (2) als einen inneren Hohlraum umgebende Mantelfläche (4) ausgebildet ist, die an dem rückwärtigen Ende (5) des Rotorblattes (2) in einen zylindermantelförmigen Verlauf übergeht bis zu einer ebenen, rückwärtigen Anschlussfläche (6), **dadurch gekennzeichnet, dass** in der rückwärtigen Anschlussfläche kranzförmig angeordnete Sacklochbohrungen (7) vorgesehen sind, welche einerseits bis zu je einem in das Rotorblatt (2) eingesetzten Verankerungskörper (8) aus einem harten Material wie bspw. Eisen führen, worin sie sich als Innengewindebohrungen fortsetzen, und die andererseits mit kranzförmig verteilt angeordneten Durchgangsbohrungen (17;57) in dem betreffenden Anschlusselement (13;13';53) hinsichtlich Anzahl, Durchmesser und Ausrichtung derart übereinstimmen, dass sie fluchten und dadurch das Einstecken je eines Stehbolzens (19) erlauben.

2. Windkraftanlage nach Anspruch 1, **dadurch gekennzeichnet, dass** die Wälzkörper (24,25;61,62) zweier, axial gegeneinander versetzter Laufbahnen derart ausgerichtet sind, dass ihre Rotationsachsen (31;69,70) etwa radial, d.h. etwa lotrecht, in Bezug auf die Längsachse des betreffenden Rotorblattes (2) gerichtet sind.

3. Windkraftanlage nach einem der Ansprüche 1 oder 2, **dadurch gekennzeichnet, dass** die beiden Anschlusselemente (13,14;13',14';53,54) konzentrisch ineinander angeordnet sind.

4. Windkraftanlage nach einem der Ansprüche 1 bis 3, **dadurch gekennzeichnet, dass** die beiden Anschlusselemente (13,14;13',14';53,54) jeweils kranzförmig angeordnete Befestigungsbohrungen (17,18;57,58) aufweisen.

5. Windkraftanlage nach einem der vorhergehenden Ansprüche, **dadurch gekennzeichnet, dass** einander abgewandte Stirnseiten (15,16;55,56) der ringförmigen Anschlusselemente (13,14;13',14';53,54) als Anschlussflächen zu der Rotornabe (3) einerseits und zu dem betreffenden Rotorblatt (2) andererseits dienen, entweder direkt oder über dazwischenliegende Ringe, Platten od. dgl.

6. Windkraftanlage nach Anspruch 5, **dadurch gekennzeichnet, dass** der Ringspalt zwischen den beiden Anschlusselementen (13,14;13',14';53,54) jeweils im Bereich zwischen einer Wälzkörperlaufbahn und der nächstliegenden Anschlussfläche (15,16;55,56) abgedichtet ist (40,41).

7. Windkraftanlage nach einem der vorhergehenden Ansprüche, **dadurch gekennzeichnet, dass** an der dem anderen Anschlusselement (13;14') zugewandten Mantelseite eines Anschlusselements (14;13') eine vorspringende, rundum laufende Nase (21;21') vorgesehen ist.

8. Windkraftanlage nach Anspruch 7, **dadurch gekennzeichnet, dass** die beiden kreisringförmigen Seitenflächen (22,23) der Nase (21;21') den etwa zylindrischen Wälzkörpern (24,25;61,62) je einer Wälzkörperreihe als Lauffläche dienen.

9. Windkraftanlage nach Anspruch 8, **dadurch gekennzeichnet, dass** die Laufbahnen (22,23,37) für die etwa zylindrischen Wälzkörper (24,25;61,62) entlang von etwa ebenen Kreisringflächen verlaufen, die von der Längsachse des betreffenden Rotorblattes (2) etwa lotrecht durchsetzt werden.

10. Windkraftanlage nach einem der vorhergehenden Ansprüche, **gekennzeichnet durch** wenigstens eine dritte Lagerstelle (35), die zwischen zwei einander zugewandten Mantelflächen (33) der beiden Anschlusselemente (13,14;13',14';53,54) eingefügt ist.

11. Windkraftanlage nach Anspruch 10, **dadurch gekennzeichnet, dass** die dritte Lagerstelle (35) sich zwischen den beiden Laufbahnen für etwa zylindrische Wälzkörper (24,25;61,62) befindet, welche derart aufgerichtet sind, dass ihre Rotationsachsen (31;69,70) etwa parallel in Bezug auf die Längsachse des betreffenden Rotorblattes (2) orientiert sind.

12. Windkraftanlage nach Anspruch 10 oder 11, **dadurch gekennzeichnet, dass** die dritte Lagerstelle (35) ebenfalls als Wälzlager ausgebildet ist.

13. Windkraftanlage nach Anspruch 12, **dadurch gekennzeichnet, dass** die Rotationsachse der Wälzkörper (35) der dritten Lagerstelle etwa parallel zu der Längsachse des Rotorblatts (2) orientiert ist.

14. Windkraftanlage nach Anspruch 12 oder 13, **dadurch gekennzeichnet, dass** ein Wälzkörper (35) der dritten Lagerstelle ein kleineres Volumen aufweist als ein Wälzkörper (24,25;61,62), dessen Rotationsachse (31;69,70) nicht parallel zu der Längsachse des Rotorblatts (2) orientiert ist.

15. Windkraftanlage nach Anspruch 10 oder 11, **dadurch gekennzeichnet, dass** die dritte Lagerstelle (35) als Gleitlager ausgebildet ist.

16. Windkraftanlage nach einem der Ansprüche 10 bis 15, **dadurch gekennzeichnet, dass** die effektive Breite der Laufbahn (22,23,37), welche in Kontakt mit einem Wälzkörper (24,25;61,62) tritt, dessen Rotationsachse (31;69,70) nicht parallel in Bezug auf die Längsachse des betreffenden Rotorblattes (2) gerichtet ist, größer ist als die effektive Breite der Lauf- oder Gleitbahn (34) einer Lagerstelle (35), die zwischen zwei einander zugewandten Mantelflächen (33) der beiden Anschlusselemente (13,14;13',14';53,54) eingefügt ist.

17. Windkraftanlage nach einem der vorhergehenden Ansprüche, **dadurch gekennzeichnet, dass** ein Anschlusselement (13;14') entlang einer etwa lotrecht zu der Längsachse des Rotorblatts (2) orientierten Ebene (42) unterteilt ist.

18. Windkraftanlage nach einem der vorhergehenden Ansprüche, **dadurch gekennzeichnet, dass** der/die Übergangsbereich(e) (27,28) zwischen der Mantelfläche und einer oder beiden Stirnflächen derjenigen Wälzkörper (24,25;61,62), deren Rotationsachsen (31;69,70) nicht parallel in Bezug auf die Längsachse des betreffenden Rotorblattes (2) gerichtet sind, bombiert ist/sind.

19. Windkraftanlage nach einem der vorhergehenden Ansprüche, **dadurch gekennzeichnet, dass** die Wälzkörper (24,25;61,62), deren Rotationsachsen (31;69,70) nicht parallel in Bezug auf die Längsachse des betreffenden Rotorblattes (2) gerichtet sind, als Hohlkörper ausgebildet sind.

20. Windkraftanlage nach Anspruch 19, **dadurch gekennzeichnet, dass** benachbarte, hohle Wälzkörper (24,25;61,62) durch stirnseitige Verbindungselemente miteinander verbunden sind, welche zumindest bereichsweise in die Hohlräume der Wälzkörper (24,25;61,62) eingreifen.

21. Windkraftanlage nach Anspruch 20, **dadurch gekennzeichnet, dass** die Verbindungselemente untereinander zu einem oder mehreren Käfigen verbunden sind.

22. Windkraftanlage nach einem der vorhergehenden Ansprüche, **dadurch gekennzeichnet, dass** der Querschnitt der zum Einlegen von Wälzkörpern (24,25;61,62) vorgesehenen Laufbahnen im unbelasteten, unmontierten Zustand der Lagereinheit (1;1';52) zumindest bereichsweise nicht dem Längsschnitt eines dort einzulegenden Wälzkörpers (24,25;61,62) entspricht.

23. Windkraftanlage nach Anspruch 22, **dadurch gekennzeichnet, dass** die axiale Erstreckung des Querschnitts der zum Einlegen von Wälzkörpern (24,25;61,62) vorgesehenen Laufbahnen zumindest bereichsweise kleiner ist als der Durchmesser des damit korrespondierenen Abschnitts eines Wälzkörpers (24,25;61,62).

24. Windkraftanlage nach einem der vorhergehenden Ansprüche, **dadurch gekennzeichnet, dass** die Wälzkörper (24,25;61,62), deren Rotationsachsen (31;69,70) nicht parallel in Bezug auf die Längsachse des betreffenden Rotorblattes (2) gerichtet sind, zumindest eine kalottenförmig gewölbte Stirnseite (29) aufweisen.

25. Windkraftanlage nach Anspruch 24, **dadurch gekennzeichnet, dass** der Wölbungsradius der kalottenförmigen Stirnseite (29) etwa dem Radius der Innenseite des Außenrings (14) entspricht.

26. Windkraftanlage nach einem der vorhergehenden Ansprüche, **dadurch gekennzeichnet, dass** zwischen benachbarten Wälzkörpern (24,25;61,62) je ein Distanzstück eingefügt ist, dessen radialer Längsschnitt kleiner ist als der radiale Längsschnitt eines Wälzkörpers (24,25;61,62) oder genauso groß wie jener.

27. Windkraftanlage nach einem der vorhergehenden Ansprüche, **dadurch gekennzeichnet, dass** an keinem Anschlusselement (13,14;53,54) eine Verzahnung vorgesehen ist.

28. Windkraftanlage nach einem der Ansprüche 1 bis 26, **dadurch gekennzeichnet, dass** an einem Anschlusselement (13',14') eine Verzahnung (46) vorgesehen ist.

29. Windkraftanlage nach Anspruch 28, **dadurch gekennzeichnet, dass** die Verzahnung (46) an der Innenseite des Innenrings (13') vorgesehen ist.

30. Verfahren zum Betrieb einer Windkraftanlage nach einem der vorhergehenden Ansprüche, **dadurch gekennzeichnet, dass** das/die betreffende(n) Rotorblatt (-blätter) (2) wenigstens während des Betriebs der Windkraftanlage beständig um seine/ihre Längsachse(n) verdreht wird/werden, also auch dann, wenn eine gleichbleibende Windgeschwindigkeit eine Blattverstellung nicht notwendig macht.

31. Verfahren nach Anspruch 30, **dadurch gekennzeichnet, dass** die beständige Verdrehung eines Rotorblattes (2) eine periodische Bewegung ist.

32. Verfahren nach Anspruch 31, **dadurch gekennzeichnet, dass** die Periode der Verdrehung eines Rotorblattes (2) der Umdrehungsperiode des Windrades entspricht, solange letztere einen vorgegebenen, unteren Grenzwert nicht unterschreitet.

33. Verfahren nach Anspruch 31 oder 32, **dadurch gekennzeichnet, dass** die Periode der Verdrehung eines Rotorblattes (2) etwa konstant gehalten wird, wenn die Umdrehungsperiode des Windrades einen vorgegebenen, unteren Grenzwert unterschreitet.

34. Verfahren nach einem der Ansprüche 31 bis 33, **dadurch gekennzeichnet, dass** die periodische Verstellbewegung zwischen zwei Extremwerten oszilliert.

35. Verfahren nach Anspruch 34, **dadurch gekennzeichnet, dass** die Amplitude der Verdrehung eines Rotorblattes (2) in Abhängigkeit von der unterschiedlichen Windgeschwindigkeit über Grund vorgegeben wird, welche auf die Rotorblätter etwa an deren oberster und unterster Position einwirkt, entweder anhand einer Messung dieser unterschiedlichen Windgeschwindigkeit oder anhand einer steuerungstechnischen Vorgabe aufgrund einer Schätzung dieser unterschiedlichen Windgeschwindigkeiten.

36. Verfahren nach Anspruch 35, **dadurch gekennzeichnet, dass** während des Betriebs die Amplitude der Verdrehung eines Rotorblattes (2) einen vorgegebenen, nicht verschwindenden Grenzwert nicht unterschreitet.

37. Verfahren nach einem der Ansprüche 33 bis 36, **dadurch gekennzeichnet, dass** der Mittelwert zwischen den Extremwerten der Verdrehung eines Rotorblattes (2) von der Windgeschwindigkeit abhängt.

## Claims

1. Wind turbine, comprising a wind-driven wheel with at least one elongated rotor blade (2), which is pivoted at a rotor hub (3) of the wind-driven wheel by means of a bearing unit (1; 1'; 52) comprising two annular elements (13, 14; 13', 14' 53, 54) rotatable with regard to each other for indirect or direct connection to the rearward end (5) of the regarding rotor blade (2) on the one side and to a rotor hub (3) of the regarding wind-driven wheel on the other side, as well as at least two mutually axially offset raceways with revolving rolling bodies (24, 25; 61, 62), whereby said rolling bodies (24, 25; 61, 62) of two said mutually axially offset raceways have a roughly cylindrical shape, i.e., each having a lateral surface (26) that is rotationally symmetrical with respect to exactly one axis of rotation (31; 69, 70), especially of cylindrical, conical, needle or barrel shape, wherein these rolling bodies (24, 25; 61, 62) are aligned such that their axes of rotation (31; 69, 70) intersect with the longitudinal axis of the particular said rotor blade (2) at an angle of between 30° and 90°, and whereby the rotor blade (2) the rotor blade (2) is designed as a lateral surface (4) surrounding an inner cavity, which lateral surface (4) transforms into a shape of a casing at the rearward end (5) of the rotor blade (2) up to an even, rearward connecting surface (6), **characterized in that** blind hole bores (7) arranged in a coronoid shape are provided at the rearward connecting surface, which bores on the one hand lead to an anchoring body, which is made from a hard material like iron, for example, and is inserted into the rotor blade (2), where they are adjoined by internal thread bores, and which bores on the other hand coincide with annularly distributed through-bores (17; 57) in the regarding connecting element (13; 13'; 53) with regard to number, diameter and direction such that they are aligned and therefore allow the insertion of a stud bolt (19).

2. Wind turbine according to claim 1, **characterized in that** said rolling bodies (24, 25; 61, 62) of two said mutually axially offset raceways are oriented such that their axes of rotation (31; 69, 70) are directed approximately radially, i.e. approximately perpendicularly, to the longitudinal axis of the particular said rotor blade (2).

3. Wind turbine according to one of claims 1 or 2, **characterized in that** said two connecting elements (13, 14; 13', 14'; 53, 54) are arranged concentrically one inside the other.

4. Wind turbine according to one of claims 1 to 3, **characterized in that** said two connecting elements (13, 14; 13', 14'; 53, 54) each comprise coronally arranged fastening bores (17, 18; 57, 58).

5. Wind turbine according to one of the preceding claims, **characterized in that** mutually oppositely facing end faces (15, 16; 55, 58) of said annular connecting elements (13, 14; 13', 14'; 53, 54) serve as connecting surfaces for connection to the rotor hub (3), on the one side, and to the particular said rotor blade (2), on the other side, either directly or via interposed rings, plates or the like.

6. Wind turbine according to claim 5, **characterized in that** the annular gap between each set of two said connecting elements (13, 14; 13', 14'; 53, 54) is sealed (40, 41) in the region between a said rolling body raceway and the nearest said connecting surface (15, 16; 55, 56).

7. Wind turbine according to one of the preceding claims, **characterized in that** a projecting, circumambient flange (21; 21') is provided on that side of the lateral surface of a said connecting element (14; 13') that faces toward the other said connecting element (13; 14').

8. Wind turbine according to claim 7, **characterized in that** the two annular lateral surfaces (22, 23) of said flange (21; 21') each serve as running surface for said roughly cylindrical rolling bodies (24, 25; 61, 62) of a respective row of rolling bodies.

9. Wind turbine according to claim 8, **characterized in that** said raceways (22, 23, 37) for said roughly cylindrical rolling bodies (24, 25; 61, 62) extend along roughly planar annular surfaces that are roughly perpendicularly intersected by the longitudinal axis of the particular said rotor blade (2).

10. Wind turbine according to one of the preceding claims, **characterized by** at least one third bearing point (35), which is interposed between two mutually confronting lateral surfaces (33) of said two connecting elements (13, 14; 13', 14'; 53, 54).

11. Wind turbine according to claim 10, **characterized in that** said third bearing point (35) is disposed between said two raceways for said roughly cylindrical rolling bodies (24, 25; 61, 62) aligned such that their axes of rotation (31, 69, 70) are not oriented parallel to the longitudinal axis of the particular rotor blade (2).

12. Wind turbine according to claim 10 or 11, **characterized in that** said third bearing point (35) is also configured as a rolling bearing.

13. Wind turbine according to claim 12, **characterized in that** the axis of rotation of said rolling bodies (35) of said third bearing point is oriented roughly parallel to the longitudinal axis of said rotor blade (2).

14. Wind turbine according to claim 12 or 13, **characterized in that** a rolling body (35) of said third bearing point has a smaller volume than a rolling body (24, 25; 61, 62) whose axis of rotation (31; 69, 70) is not oriented parallel to the longitudinal axis of said rotor blade (2).

15. Wind turbine according to claim 10 or 11, **characterized in that** said third bearing point (35) is configured as a sliding bearing.

16. Wind turbine according to one of claims 10 to 15, **characterized in that** the effective width of said raceway (22, 23, 37), which enters into contact with a said rolling body (24, 25; 61, 62) whose axis of rotation (31; 69, 70) is not oriented parallel to the longitudinal axis of the particular said rotor blade (2), is greater than the effective width of the path of travel or gliding path (34) of a bearing point (35) interposed between two mutually confronting lateral surfaces (33) of two said connecting elements (13, 14; 13', 14'; 53, 54).

17. Wind turbine according to one of the preceding claims, **characterized in that** a said connecting element (13; 14') is divided along a plane (42) oriented roughly perpendicular to the longitudinal axis of said rotor blade (2).

18. Wind turbine according to one of the preceding claims, **characterized in that** the transitional region(s) (27, 28) between said lateral surface and one or both of said end faces of those rolling bodies (24, 25; 61, 62) whose axes of rotation (31; 69, 70) are not oriented parallel to the longitudinal axis of the particular said rotor blade (2) is/are cambered.

19. Wind turbine according to one of the preceding claims, **characterized in that** said rolling bodies (24, 25; 61, 62) whose axes of rotation (31; 69, 70) are not directed parallel to the longitudinal axis of the particular said rotor blade (2) are configured as hollow bodies.

20. Wind turbine according to claim 19, **characterized in that** adjacent hollow said rolling bodies (24, 25; 61, 62) are connected to each other by end-face connecting elements that engage, at least regionally, in the hollow spaces of said rolling bodies (24, 25; 61, 62).

21. Wind turbine according to claim 20, **characterized in that** said connecting elements are interconnected to form one or more cages.

22. Wind turbine according to one of the preceding claims, **characterized in that** in the unloaded, unmounted state of the bearing unit (1; 1'; 52), the respective cross sections of the said raceways provided for the seating of said rolling bodies (24, 25; 61, 62) do not correspond, at least regionally, to the longitudinal section of a rolling body (24, 25; 61, 62) to be seated therein.

23. Wind turbine according to claim 22, **characterized in that** the axial extent of the respective cross sections of the said raceways provided for the seating of said rolling bodies (24, 25; 61, 62) are at least regionally smaller than the diameter of the thereto-corresponding portion of a rolling body (24, 25; 61 62).

24. Wind turbine according to one of the preceding claims, **characterized in that** the said rolling bodies (24, 25; 61, 62) whose axes of rotation (31; 69, 70) are not directed parallel to the longitudinal axis of the particular said rotor blade (2) have at least one end face (29) that is curved in a dome shape.

25. Wind turbine according to claim 24, **characterized in that** the radius of curvature of the dome-shaped end face (29) approximately corresponds to the radius of the inner face of said outer ring (14).

26. Wind turbine according to one of the preceding claims, **characterized in that** interposed between adjacent said rolling bodies (24, 25; 61, 62) is a respective spacer whose radial longitudinal section is smaller than or exactly the same size as the radial longitudinal section of a said rolling body (24, 25; 61, 62).

27. Wind turbine according to one of the preceding claims, **characterized in that** no teeth are provided on any of said connecting elements (13, 14; 53, 54).

28. Wind turbine according to one of claims 1 to 26, **characterized in that** teeth (46) are provided on one said connecting element (13'; 14').

29. Wind turbine according to claim 28, **characterized in that** teeth (46) are provided on the inner face of said inner ring (13').

30. Method of operating a wind power plant according to one of the preceding claims, **characterized in that** the regarding rotor blade(s) (2) is/are rotated constantly about its/their longitudinal axis/axes at least during the operation of said wind power plant, i.e. even **in that** case when a steady wind velocity renders blade adjustment unnecessary.

31. Method according to claim 30, **characterized in that** the constant rotation of a said rotor blade (2) is a periodic motion.

32. Method according to claim 31, **characterized in that** the period of rotation of a said rotor blade (2) is the same as the period of revolution of the wind wheel, as long as the latter does not fall below a set lower limit.

33. Method according to claim 31 or 32, **characterized in that** the period of rotation of a said rotor blade (2) is held roughly constant if the period of revolution of the wind wheel falls below a set lower limit.

34. Method according to one of claims 31 to 33, **characterized in that** the periodic adjusting motion oscillates between two extreme values.

35. Method according to claim 34, **characterized in that** the amplitude of rotation of a said rotor blade (2) is set as a function of the wind velocity varying with distance from the ground and acting on said rotor blades approximately at their uppermost and lowermost positions, either on the basis of a measurement of this varying wind velocity or on the basis of a control setpoint based on an estimate of these varying wind velocities.

36. Method according to claim 35, **characterized in that** during operation, the amplitude of rotation of a said rotor blade (2) does not fall below a set non-vanishing limit.

37. Method according to one of claims 33 to 36, **characterized in that** the mean between the extreme values of the rotation of a said rotor blade (2) depends on the wind velocity.

## Revendications

1. Éolienne comprenant une roue éolienne avec au moins une pale de rotor allongée (2) qui est montée sur le moyeu de rotor (3) de la roue éolienne au moyen d'un ensemble de roulements (1 ; 1' ; 52) qui présente deux éléments annulaires (13, 14 ; 13', 14' ; 53, 54) pouvant tourner en opposition pour le raccordement indirect ou direct, d'une part, sur l'extrémité arrière (5) de la pale de rotor (2) en question et, d'autre part, sur le moyeu de rotor (3) de la roue éolienne, ainsi qu'au moins deux chemins de roulement décalés axialement les uns par rapport aux autres avec des organes de roulement (24, 25 ; 61, 62) périphériques, où les organes de roulement (24, 25 ; 61, 62) de deux chemins de roulement décalés axialement les uns par rapport aux autres présentent une forme approximativement cylindrique, c'est-à-dire avec respectivement une surface latérale (28) qui est à symétrie de révolution par rapport à exactement un axe de rotation (31 ; 69, 70), en particulier en forme de cylindre, de cône, d'aiguille ou de tonneau, où ces organes de roulement (24, 25 ; 61, 62) sont positionnés de façon à ce que leurs axes de rotation (31 ; 69, 70) coupent l'axe longitudinal de la pale de rotor (2) en question à un angle qui est compris entre 30 et 90°, et où la pale de rotor (2) est réalisée sous forme de surface latérale (4) entourant une cavité intérieure qui a à l'extrémité arrière (5) de la pale de rotor (2) une allure de forme cylindrique jusqu'à une surface de raccordement (6) plane arrière, **caractérisée en ce que** dans la surface de raccordement arrière sont prévus des alésages borgnes (7) disposés en forme de couronne lesquels mènent, d'une part, jusque respectivement à un organe d'ancrage (8) en matériau dur comme par exemple du fer, inséré dans la pale de rotor (2), dans lequel ils continuent sous forme de trous taraudés et, d'autre part, les trous débouchant (17 ; 57) disposés et répartis en forme de couronne dans l'élément de raccordement (13 ; 13' ; 53) en question correspondent quant au nombre, diamètre et alignement de façon à ce qu'ils s'alignent et permettent ainsi l'insertion respectivement d'un goujon fileté (19).

2. Éolienne selon la revendication 1, **caractérisée en ce que** les organes de roulement (24, 25 ; 61, 62) de deux chemins de roulement décalés axialement les uns par rapport aux autres sont alignés de façon à ce que leurs axes de rotation (31 ; 69, 70) soient dirigés approximativement radialement, c'est-à-dire approximativement perpendiculairement par rapport à l'axe longitudinal de la pale de rotor (2) en question.

3. Éolienne selon l'une des revendications 1 ou 2, **caractérisée en ce que** les deux éléments de raccordement (13, 14 ; 13', 14' ; 53, 54) sont disposés de manière concentrique l'un dans l'autre.

4. Éolienne selon l'une des revendications 1 à 3, **caractérisée en ce que** les deux éléments de raccordement (13, 14 ; 13', 14' ; 53, 54) présentent chacun des trous de fixation (17, 18 ; 57, 58) disposés en forme de couronne.

5. Éolienne selon l'une des revendications précédentes, **caractérisé en ce que** des faces frontales (15, 16 ; 55, 56) opposées l'une par rapport à l'autre des éléments de raccordement (13, 14 ; 13', 14' ; 53, 54) de forme annulaire servent, d'une part, de surfaces de raccordement au moyeu de rotor (3) et, d'autre part, à la pale de rotor (2) en question, soit directement ou par le biais de bagues intermédiaires, plaques ou similaire.

6. Éolienne selon la revendication 5, **caractérisée en ce que** la fente annulaire entre les deux éléments de raccordement (13, 14 ; 13', 14' ; 53, 54) est étanchéifiée (40, 41) respectivement dans la zone entre un chemin de roulement des organes de roulement et la surface de raccordement (15, 16 ; 55, 56) la plus proche.

7. Éolienne selon l'une des revendications précédentes, **caractérisée en ce qu'**un taquet (21 ; 21') saillant, continu, est prévu sur la face latérale d'un élément de raccordement (14 ; 13') tournée vers l'autre élément de raccordement (13 ; 14').

8. Éolienne selon la revendication 7, **caractérisée en ce que** les deux surfaces latérales (22, 23) de forme annulaire du taquet (21 ; 21') servent par rangée d'organes de roulement de surface de roulement aux organes de roulement (24, 25 ; 61, 62) approximativement cylindriques.

9. Éolienne selon la revendication 8, **caractérisée en ce que** les chemins de roulement (22, 23, 37) pour les organes de roulement (24, 25 ; 61, 62) approximativement cylindriques s'étendent le long de surfaces annulaires approximativement planes qui sont traversées approximativement perpendiculairement à partir de l'axe longitudinal de la pale de rotor (2) en question.

10. Éolienne selon l'une des revendications précédentes, **caractérisée par** au moins un troisième logement de palier (35) qui est ajouté entre deux surfaces latérales (33) tournées l'une vers l'autre des deux éléments de raccordement (13, 14 ; 13', 14' ; 53, 54).

11. Éolienne selon la revendication 10, **caractérisée en ce que** le troisième logement de palier (35) se trouve entre les deux chemins de roulement pour des organes de roulement (24, 25 ; 61, 62) approximativement cylindriques lesquels sont alignés de façon à ce que leurs axes de rotation (31 ; 69, 70) soient orientés approximativement parallèlement par rapport à l'axe longitudinal de la pale de rotor (2) en question.

12. Éolienne selon la revendication 10 ou 11, **caractérisée en ce que** le troisième logement de palier (35) est également conçu comme de palier à roulement.

13. Éolienne selon la revendication 12, **caractérisée en ce que** l'axe de rotation des organes de roulement (35) du troisième logement de palier est orienté approximativement parallèlement par rapport à l'axe longitudinal de la pale de rotor (2).

14. Éolienne selon la revendication 12 ou 13, **caractérisée en ce qu'**un organe de roulement (35) du troisième logement de palier présente un volume inférieur à un organe de roulement (24, 25 ; 61, 62) dont l'axe de rotation (31 ; 69, 70) n'est pas orienté parallèlement par rapport à l'axe longitudinal de la pale de rotor (2).

15. Éolienne selon la revendication 10 ou 11, **caractérisée en ce que** le troisième logement de palier (35) est conçu comme palier lisse.

16. Éolienne selon l'une des revendications 10 à 15, **caractérisée en ce que** la largeur effective du chemin de roulement (22, 23, 37) qui entre en contact avec un organe de roulement (24, 25 ; 61, 62), dont l'axe de rotation (31 ; 69, 70) n'est pas orienté parallèlement par rapport à l'axe longitudinal de la pale de rotor (2) en question, est supérieure à la largeur effective du chemin de roulement ou de glissement (34) d'un logement de palier (35) qui est inséré entre deux surfaces latérales (33) tournées l'une vers l'autre des deux éléments de raccordement (13, 14 ; 13', 14' ; 53, 54).

17. Éolienne selon l'une des revendications précédentes, **caractérisée en ce qu'**un élément de raccordement (13 ; 14') est divisé le long d'un plan (42) orienté approximativement perpendiculairement par rapport à l'axe longitudinal de la pale de rotor (2).

18. Éolienne selon l'une des revendications précédentes, **caractérisée en ce que** la/les zone(s) de transition (27, 28) entre la surface latérale et une ou deux surfaces frontales des organes de roulement (24, 25 ; 61, 62), dont les axes de rotation (31 ; 69, 70) ne sont pas orientés parallèlement par rapport à l'axe longitudinal de la pale de rotor (2) en question, est/sont bombée(s).

19. Éolienne selon l'une des revendications précédentes, **caractérisée en ce que** les organes de roulement (24, 25 ; 61, 62) dont les axes de rotation (31 ; 69, 70) ne sont pas orientés parallèlement par rapport à l'axe longitudinal de la pale de rotor (2) en question, sont conçus comme corps creux.

20. Éolienne selon la revendication 19, **caractérisée en ce que** des organes de roulement (24, 25 ; 61, 62) creux, adjacents sont reliés entre eux par des éléments de raccordement frontaux lesquels s'engagent tout au moins partiellement dans les cavités des organes de roulement (24, 25 ; 61, 62).

21. Éolienne selon la revendication 20, **caractérisée en ce que** les éléments de raccordement sont reliés entre eux à une ou plusieurs cages.

22. Éolienne selon l'une des revendications précédentes, **caractérisée en ce que** la section des chemins de roulement prévus pour l'insertion d'organes de roulement (24, 25 ; 61, 62) dans un état sans charge, non monté de l'ensemble des roulements (1 ; 1',52) ne correspond pas tout au moins partiellement à la coupe longitudinale d'un organe de roulement (24, 25 ; 61, 62) qui doit y être inséré.

23. Éolienne selon la revendication 22, **caractérisée en ce que** l'extension axiale de la section des chemins de roulement prévus pour l'insertion d'organes de roulement (24, 25 ; 61, 62) est tout au moins partiellement inférieure au diamètre de la section lui correspondant d'un organe de roulement (24, 25 ; 61, 62).

24. Éolienne selon l'une des revendications précédentes, **caractérisée en ce que** les organes de roulement (24, 25 ; 61, 62) dont les axes de rotation (31 ; 69, 70) ne sont pas orientés parallèlement par rapport à l'axe longitudinal de la pale de rotor (2) en question, présentent tout au moins une face frontale (29) bombée en forme de calotte.

25. Éolienne selon la revendication 24, **caractérisée en ce que** le rayon de courbure de la face frontale (29) en forme de calotte correspond approximativement au rayon de la face intérieure de la bague extérieure (14).

26. Éolienne selon l'une des revendications précédentes, **caractérisée en ce qu'**entre des organes de roulement (24, 25 ; 61, 62) adjacents est insérée respectivement une pièce intercalaire dont la coupe longitudinale radiale est inférieure à la coupe longitudinale radiale d'un organe de roulement (24, 25 ; 61, 62) ou égale à celle-ci.

27. Éolienne selon l'une des revendications précédentes, **caractérisée en ce qu'**aucune denture n'est prévue sur un élément de raccordement (13, 14 ; 53, 54).

28. Éolienne selon l'une des revendications 1 à 26, **caractérisée en ce qu'**une denture (46) est prévue sur un élément de raccordement (13', 14').

29. Éolienne selon la revendication 28, **caractérisée en ce que** la denture (46) est prévue sur la face intérieure de la bague intérieure (13').

30. Procédé pour le fonctionnement d'une éolienne selon l'une des revendications précédentes, **caractérisé en ce que** la/les pale(s) de rotor (2) en question tourne(nt) constamment tout au moins durant le fonctionnement de l'éolienne autour de son/ses et/ou leur(s) axe(s) longitudinal/longitudinaux, par conséquent également lorsqu'une vitesse de vent constante ne requiert pas un réglage de pale.

31. Procédé selon la revendication 30, **caractérisé en ce que** la torsion constante d'une pale de rotor (2) est un mouvement périodique.

32. Procédé selon la revendication 31, **caractérisé en ce que** le cycle de torsion d'une pale de rotor (2) correspond au cycle de rotation de la roue éolienne tant que ce dernier n'est pas en dessous d'une valeur limite inférieure prédéfinie.

33. Procédé selon la revendication 31 ou 32, **caractérisé en ce que** le cycle de torsion d'une pale de rotor (2) est maintenu approximativement constant lorsque le cycle de rotation de la roue éolienne est en dessous d'une valeur limite inférieure prédéfinie.

34. Procédé selon l'une des revendications 31 à 33, **caractérisé en ce que** le mouvement de réglage périodique oscille entre deux valeurs extrêmes.

35. Procédé selon la revendication 34, **caractérisé en ce que** l'amplitude de la torsion d'une pale de rotor (2) est prédéfinie en fonction de la vitesse de vent variable au-dessus du sol qui a un impact sur les pales de rotor, approximativement sur leur position supérieure et inférieure, soit au moyen d'une mesure de cette vitesse de vent variable ou au moyen d'une spécification de technique de commande sur la base d'une estimation de ces vitesses de vent variables.

36. Procédé selon la revendication 35, **caractérisé en ce que** l'amplitude de la torsion d'une pale de rotor (2) durant le fonctionnement n'est pas inférieure à une valeur limite prédéfinie, ne s'annulant pas.

37. Procédé selon l'une des revendications 33 à 36, **caractérisé en ce que** la valeur moyenne entre les valeurs extrêmes de la torsion d'une pale de rotor (2) est en fonction de la vitesse du vent.
